# EUROPÄISCHE PATENTSCHRIFT

(11) **EP 1 162 357 B1**
(45) Veröffentlichungstag und Bekanntmachung des Hinweises auf die Patenterteilung: **02.11.2006**
(21) Anmeldenummer: 01112926.9
(22) Anmeldetag: 06.06.2001
(51) Int. Cl.: F02D 35/02, F02D 41/14

(54) **Verfahren und Vorrichtung zum Überwachen des Betriebs eines Verbrennungsmotors**
Method and apparatus for monitoring the operations of an engine
Procédé et dispositif pour surveiller le fonctionnement d'un moteur à combustion interne

(30) Priorität: 10.06.2000 DE 10028886
(43) Veröffentlichungstag der Anmeldung: 12.12.2001
(73) Patentinhaber: Volkswagen Aktiengesellschaft, 38436 Wolfsburg (DE)
(72) Erfinder: Jeschke, Jens, 38106 Braunschweig (DE); Gloger, Jürgen, 38518 Gifhorn (DE); Nitzke, Hans-Georg, 38547 Wettmershagen (DE)

(56) Entgegenhaltungen:
- DE-A- 4 443 517
- DE-A- 10 002 112
- US-A- 3 930 221
- US-A- 5 794 605
- PATENT ABSTRACTS OF JAPAN vol. 017, no. 604 (M-1506), 8. November 1993 (1993-11-08) & JP 05 180019 A (MITSUBISHI MOTORS CORP), 20. Juli 1993 (1993-07-20)

## Beschreibung

Die vorliegende Erfindung betrifft ein Verfahren nach dem Oberbegriff des Anspruches 1 zum Überwachen des Betriebs eines Verbrennungsmotors, insbesondere eines Dieselmotors, sowie eine entsprechend ausgestaltete Vorrichtung nach dem Oberbegriff des Anspruches 6.

Auf dem Gebiet der Kraftfahrzeugtechnik ist die Überwachung des im Brennraum (Zylinder) eines Verbrennungsmotors, insbesondere eines Diesel- oder Ottomotors, auftretenden Brennraum- oder Zylinderdrucks von besonderer Bedeutung, da durch Auswertung des Brennraumdrucks der in dem jeweiligen Brennraum ablaufende Verbrennungsvorgang überwacht werden kann.

So ist beispielsweise in der DE 197 49 814 A1 ein Verfahren zum Erfassen des Brennraumdruckverlaufs in Abhängigkeit von dem Kurbelwellenwinkel bei einem Verbrennungsmotor beschrieben, wobei in jeden Zylinder des Verbrennungsmotors ein Drucksensor zur Erfassung des jeweiligen Brennraumdrucks eingesetzt ist, dessen Ausgangssignal zur Ermittlung von Größen, die den Verbrennungsvorgang in dem jeweiligen Zylinder bzw. Brennraum beschreiben, ausgewertet werden kann. Dabei wird in dieser Druckschrift insbesondere vorgeschlagen, das so genannte Differenzdruckintegral zu ermitteln. Hierzu wird zunächst die Differenz zwischen dem im gefeuerten Betrieb, d.h. im Verbrennungsbetrieb, gemessenen Brennraumdruck und dem im geschleppten Betrieb, d.h. ohne Verbrennung, auftretenden Brennraumdruck ermittelt und diese Differenz aufintegriert. Das daraus resultierende Differenzdruckintegral stellt eine wesentliche Größe dar, da anhand der Größe des Differenzdruckintegrals beurteilt werden kann, wie die Verbrennung abgelaufen ist und ob überhaupt eine Verbrennung stattgefunden hat oder möglicherweise ein Verbrennungsaussetzer aufgetreten ist.

Im Zusammenhang mit dem Betrieb eines Verbrennungsmotors wird abhängig vom Motortyp häufig ein Ladedrucksensor verwendet, der vor dem jeweiligen Verbrennungsmotor angeordnet ist und den jeweils herrschenden Ladedruck, mit dem die Ladeluft den einzelnen Brennräumen des Verbrennungsmotors zugeführt wird, erfasst.

Daneben wäre zur Überwachung des Betriebs des Verbrennungsmotors auch ein Abgasgegendrucksensor sinnvoll, der den Abgasgegendruck, d.h. den unmittelbar vor der Turbine herrschenden Druck erfasst, um Rückschlüsse auf die Abgasrückführung zu ermöglichen. Ein derartiger Abgasgegendrucksensor kann hinsichtlich der Abstimmung der Gasdynamik, des Ladedrucks, der Abgasrückführregelung und der Regelung des Verbrennungsablaufs in den einzelnen Brennräumen des Verbrennungsmotors einen enormen Vorteil bringen. Abgasgegendrucksensoren besitzen jedoch den Nachteil, dass sich ihr Verhalten umso stärker durch eine in einem Brennraum ablaufende Verbrennung verändert, je näher sie an dem entsprechenden Brennraum angeordnet sind.

Allgemein muss bei herkömmlichen Verbrennungsmotoren zur Erfassung des Ladedrucks bzw. Abgasgegendrucks ein entsprechender separater Sensor vorgesehen sein.

Der vorliegenden Erfindung liegt die Aufgabe zugrunde, ein Verfahren sowie eine Vorrichtung zum Überwachen des Betriebs eines Verbrennungsmotors vorzuschlagen, wobei eine zuverlässige Aussage über den Betriebszustand des Verbrennungsmotors mit einem geringeren Aufwand und somit auch mit geringeren Kosten getroffen werden kann.

Dieser Aufgabe wird erfindungsgemäß durch ein Verfahren mit den Merkmalen des Anspruches 1 bzw. eine Vorrichtung mit den Merkmalen des Anspruches 6 gelöst. Die Unteransprüche definieren bevorzugte und vorteilhafte Ausführungsformen der vorliegenden Erfindung.

Der in mindestens einem Brennraum eines Verbrennungsmotors auftretende Brennraumdruck wird erfasst und ausgewertet. Umfangreiche Untersuchungen haben ergeben, dass eine Korrelation zwischen dem somit erfassten Brennraumdruck und dem Ladedruck oder Abgasgegendruck des Verbrennungsmotors besteht. Durch eine Auswertung des Ladungswechselbereichs kann somit anhand des Brennraumdrucksignals auf den Ladedruck bzw. Abgasgegendruck geschlossen werden. Um eine zuverlässige Korrelation zwischen dem Brennraumdruck und dem Ladedruck bzw. Abgasgegendruck zu erhalten, empfiehlt es sich, über mehrere Ladungswechselzyklen, insbesondere über mindestens 40 Ladungswechselzyklen, zu mitteln. Aus dem somit gemittelten Drucksignal kann dann direkt eine Aussage über den Ladedruck bzw. Abgasgegendruck abgeleitet werden.

Da das direkte Ableiten des Ladedrucks bzw. Abgasgegendrucks aus dem gemittelten Drucksignal unter Umständen sehr aufwendig ist, kann auf das gemittelte Drucksignal ein entsprechendes Modell angewendet werden, um abhängig von dem jeweils betrachteten Kurbelwellenwinkelfenster eine Aussage über den Ladedruck bzw. Abgasgegendruck zu gewinnen.

Da durch Auswertung des Brennraumdrucks sowohl auf den Ladedruck als auch auf den Abgasgegendruck geschlossen werden kann, kann ein separater Ladedrucksensor bzw. Abgasgegendrucksensor entfallen. Besonders vorteilhaft ist es, wenn in jedem Brennraum bzw. Zylinder des Verbrennungsmotors der dort herrschende Brennraumdruck erfasst und die daraus resultierenden Brennraumdrucksignale in Kombination ausgewertet werden, da durch die somit gewonnene Redundanz zuverlässigere Informationen über den Ladedruck bzw. Abgasgegendruck gewonnen werden können.

Die vorliegende Erfindung eignet sich insbesondere zum Überwachen des Betriebs eines Dieselmotors. Selbstverständlich kann die Erfindung jedoch auch auf andere Motorarten, wie beispielsweise auf Ottomotoren, angewendet werden.

Die vorliegende Erfindung wird nachfolgend näher anhand eines bevorzugten Ausführungsbeispiels unter Bezugnahme auf die beigefügte Zeichnung erläutert.

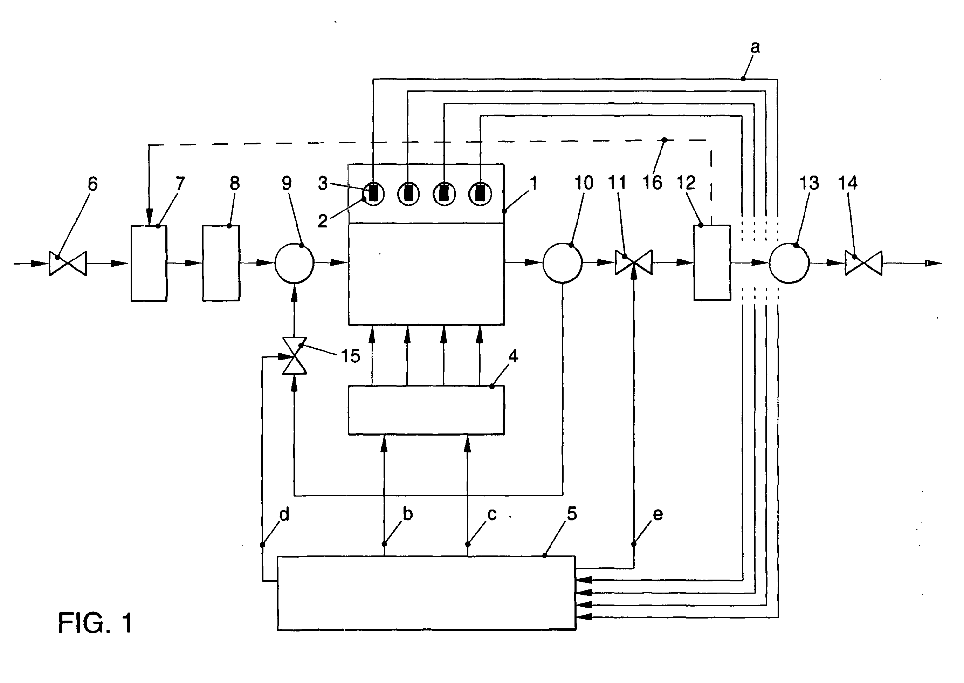

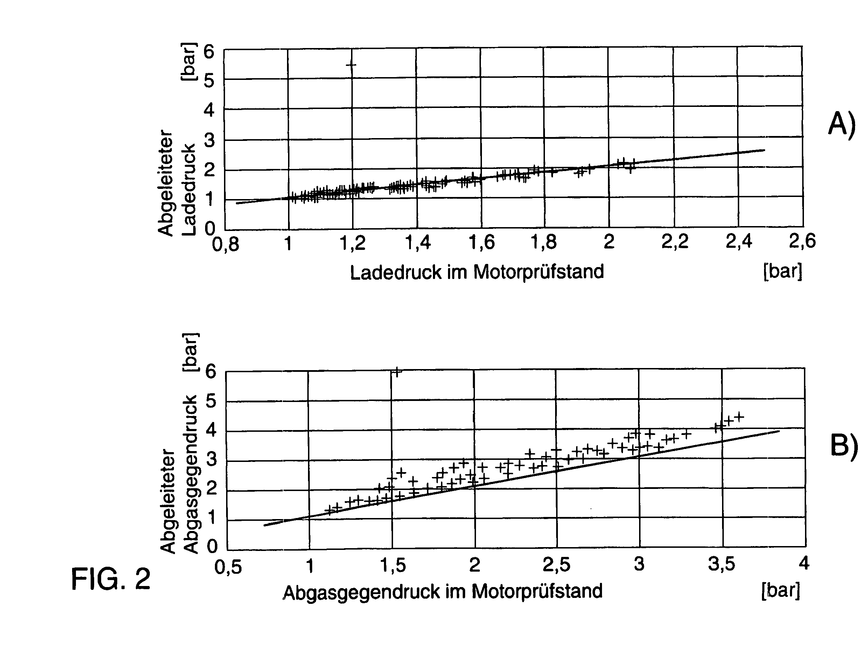

Fig. 1 zeigt eine schematische Darstellung eines Dieselmotors in Form eines Strömungsbilds gemäß einem Ausführungsbeispiel der vorliegenden Erfindung, und Fig. 2A und 2B zeigen Darstellungen zur Verdeutlichung der Funktionsweise der vorliegenden Erfindung.

In Fig. 1 ist ein Dieselmotor 1 mit vier Brennräumen bzw. Zylindern 2 dargestellt.

Dem Dieselmotor 1 wird über einen Luftmassenmesser 6, einen Verdichter (Kompressor) 7, einen Ladeluftkühler 8 und einen Einlassammler 9 die Ladeluft zugeführt. Über ein Einspritzsystem 4 wird der Einspritzbeginn bzw. der Förderbeginn und die Fördermenge eines entsprechenden Kraftstoffgemisches für die einzelnen Zylinder 2 des Dieselmotors 1 gesteuert. Das infolge der Verbrennungsvorgänge in den einzelnen Zylindern 2 auftretende Abgas wird von einem Abgassammler 10 gesammelt und einer Turbine 12 zugeführt, die über eine Turboladerwelle 16 mit dem Verdichter 7 verbunden ist. In Fig. 1 ist auch eine verstellbare Leitschaufel der Turbine 12 separat dargestellt. Der Turbine 12 ist eine Abgasanlage 13 nachgeschaltet, die das Abgas über ein Auslassrohr 14 ausgibt. Das von dem Abgassammler 10 gesammelte Abgas wird über einen Rückführungspfad zu dem Einlassammler 9 zurückgeführt. In diesem Abgasrückführungspfad ist ein Ventil 15 angeordnet, mit dessen Hilfe die Abgasrückführung gesteuert werden kann.

In jedem Zylinder 2 des Dieselmotors 1 ist ein Drucksensor 3 angeordnet. Jeder Drucksensor 3 besitzt beispielsweise eine flexible Membran, die abhängig von dem in dem jeweiligen Zylinder herrschenden Zylinderdruck verbogen wird. Von jedem Drucksensor 3 wird somit abhängig von der Verbiegung der entsprechenden Druckmembran, d.h. abhängig von dem in dem jeweiligen Zylinder herrschenden Zylinderdruck, ein entsprechendes Zylinderdrucksignal a erzeugt, welches einem Motorsteuergerät 5 zugeführt wird.

Das Motorsteuergerät 5 wertet die einzelnen Zylinderdrucksignale a aus, um davon abhängig auf den Verbrennungsablauf in den entsprechenden Zylindern 2 zu schließen. Die Auswertung der Zylinderdrucksignale a kann insbesondere kurbelwellenwinkelabhängig erfolgen. Zu diesem Zweck ist ein (in Fig. 1 nicht gezeigter) Kurbelwellensensor vorgesehen, der ein für die augenblickliche Stellung der Kurbelwelle repräsentatives Ausgangssignal erzeugt und ebenfalls dem Motorsteuergerät 5 zuführt. Durch die auf diese Weise durchgeführte Auswertung der Zylinderdrucksignale kann das Motorsteuergerät 5 auf den in jedem Zylinder 2 herrschenden Verbrennungszustand schließen und die in den einzelnen Zylindern 2 ablaufenden Verbrennungsvorgänge entsprechend steuern. Hierzu erzeugt das Motorsteuergerät 5 nach Auswertung der Zylinderdrucksignale a Stellsignale b, c, um somit die Einspritzmenge sowie den Einspritzbeginn bzw. die Einspritzdauer des Kraftstoffgemisches für die einzelnen Zylinder 2 festzulegen.

Unabhängig davon wertet das Motorsteuergerät 5 die einzelnen Zylinderdrucksignale a auch aus, um auf den Ladedruck und den Abgasgegendruck des Dieselmotors 1 zu schließen. Um eine zuverlässige Aussage über den Ladedruck und den Abgasgegendruck zu erhalten, muss hierzu über mehrere Ladungswechselzyklen gemittelt werden. In der Praxis hat es sich als ausreichend herausgestellt, wenn über mindestens 40 Ladungswechselzyklen gemittelt wird.

In Fig. 2A ist der aus den gemittelten Zylinderdrucksignalen a abgeleitete Ladedruck gegenüber dem im Motorprüfstand tatsächlich gemessenen Ladedruck aufgetragen. Auch aus Fig. 2A ist ersichtlich, dass ein annähernd linearer Zusammenhang besteht, so dass aus den gemittelten Zylinderdrucksignalen a auf den Ladedruck geschlossen werden kann.

In Fig. 2B ist der aus den gemittelten Zylinderdrucksignalen a abgeleitete Abgasgegendruck gegenüber dem im Motorprüfstand tatsächlich gemessenen Abgasgegendruck aufgetragen. Fig. 2B kann entnommen werden, dass auch für den Abgasgegendruck ein annähernd linearer Zusammenhang besteht, so dass durch Anwendung eines entsprechenden linearen Modells aus den gemittelten Zylinderdrucksignalen a indirekt auf den Abgasgegendruck geschlossen werden kann.

Nachdem das Motorsteuergerät 5 auf zuvor beschriebene Art und Weise auf den Ladedruck und/oder Abgasgegendruck geschlossen hat, werden Stellsignale d bzw. e zur Regelung des mit dem Abgasgegendruck korrelierenden Abgasrückführ-Massenstroms in dem Rückführungspfad bzw. des Ladedrucks erzeugt. Das Stellsignal d wird dem im Abgasrückführungspfad befindlichen Ventil 15 zugeführt, um auf diese Weise den Abgasrückführ-Massenstrom, d.h. die Abgasrückführung, zu steuern. Je stärker die Abgasrückführung ist, desto verschleppter wird die in den einzelnen Zylindern 2 des Dieselmotors 1 ablaufende Verbrennung. Das Stellsignal e wird hingegen der verstellbaren Leitschaufel 11 der Turbine zugeführt, durch deren Verstellung der Ladedruck entsprechend beeinflusst werden kann.

Da aus den gemittelten Zylinderdrucksignalen a mit Hilfe eines entsprechenden (linearen) Modells sowohl eine Aussage über den Ladedruck als auch eine Aussage über den Abgasgegendruck abhängig von dem jeweils betrachteten Kurbelwellenwinkelfenster gewonnen werden kann, sind bei der in Fig. 1 gezeigten Anordnung keine separaten Sensoren zur Erfassung des Ladedrucks bzw. Abgasgegendrucks erforderlich, so dass die damit verbundenen Kosten eingespart werden können.

### BEZUGSZEICHENLISTE

- 1: Verbrennungsmotor
- 2: Zylinder
- 3: Zylinderdrucksensor
- 4: Einspritzsystem
- 5: Motorsteuergerät
- 6: Luftmassenmesser
- 7: Verdichter
- 8: Ladeluftkühler
- 9: Einlassammler
- 10: Abgassammler
- 11: Leitschaufel der Turbine
- 12: Turbine
- 13: Abgasanlage
- 14: Auslassrohr
- 15: Stellventil
- 16: Turboladerwelle
- a: Zylinderdrucksignal
- b-e: Stellsignal

## Patentansprüche

1. Verfahren zum Überwachen des Betriebs eines Verbrennungsmotors,
wobei der in mindestens einem Brennraum (2) des Verbrennungsmotors (1) auftretende Brennraumdruck mit Drucksensormitteln (3) erfasst wird, und
wobei das von den Drucksensormitteln (3) erzeugte Brennraumdrucksignal (a) ausgewertet wird, um eine Aussage über den Betrieb des Verbrennungsmotors (1) zu gewinnen, **dadurch gekennzeichnet, daß** aus dem Brennraumdrucksignal (a) der Drucksensormittel (3) eine Aussage über den Ladedruck oder den Abgasgegendruck des Verbrennungsmotors (1) abgeleitet und zur Steuerung des Betriebs des Verbrennungsmotors (1) verwendet wird.

2. Verfahren nach Anspruch 1, **dadurch gekennzeichnet, daß** das Brennraumdrucksignal (a) der Drucksensormittel (3) über mehrere Ladungswechselzyklen des Verbrennungsmotors (1) gemittelt und aus dem somit gewonnenen gemittelten Brennraumdrucksignal die Aussage über den Ladedruck bzw. den Abgasgegendruck des Verbrennungsmotors (1) abgeleitet wird.

3. Verfahren nach Anspruch 2, **dadurch gekennzeichnet, daß** das Brennraumdrucksignal (a) der Drucksensormittel (3) über mindestens 40 Ladungswechselzyklen gemittelt wird.

4. Verfahren nach einem der vorhergehenden Ansprüche, **dadurch gekennzeichnet, daß** die Aussage über den Ladedruck bzw. Abgasgegendruck des Verbrennungsmotors (1) durch Anwendung eines linearen Modells aus dem Brennraumdrucksignal (a) der Drucksensormittel (3) abgeleitet wird.

5. Verfahren nach einem der vorhergehenden Ansprüche, **dadurch gekennzeichnet, daß** der Verbrennungsmotor (1) mehrere Brennräume (2) aufweist, wobei für jeden Brennraum (2) Drucksensormittel (3) zum Erfassen des in dem jeweiligen Brennraum (2) auftretenden Brennraumdrucks vorgesehen sind, und wobei die von den einzelnen Drucksensormitteln (3) erzeugten Brennraumdrucksignale (a) in Kombination ausgewertet werden, um die Aussage über den Ladedruck bzw. Abgasgegendruck des Verbrennungsmotors (1) zu gewinnen.

6. Vorrichtung zum Überwachen des Betriebs eines Verbrennungsmotors, mit Drucksensormitteln (3) zum Erfassen des in mindestens einem Brennraum (2) des Verbrennungsmotors (1) auftretenden Brennraumdrucks, und mit Steuermitteln (5) zum Auswerten des von den Drucksensormitteln (3) erzeugten Brennraumdrucksignals (a), um eine Aussage über den Betrieb des Verbrennungsmotors (1) zu gewinnen, **dadurch gekennzeichnet, daß** die Steuermittel (5) derart ausgestaltet sind, dass sie aus dem Brennraumdrucksignal (a) der Drucksensormittel (3) eine Aussage über den Ladedruck oder den Abgasgegendruck des Verbrennungsmotors (1) ableiten und davon abhängig Ladedruckanpassungsmittel (11) zur Einstellung des Ladedrucks bzw. der Abgasrückführung des Verbrennungsmotors (1) ansteuern.

7. Vorrichtung nach Anspruch 6, **dadurch gekennzeichnet, daß** die Steuermittel zur Durchführung des Verfahrens nach einem der Ansprüche 1-5 ausgestaltet sind.

8. Vorrichtung nach Anspruch 6 oder Anspruch 7, **dadurch gekennzeichnet, daß** der insbesondere als Dieselmotor ausgestaltete Verbrennungsmotor (1) mehrere Brennräume (2) aufweist, wobei jedem Brennraum (2) Drucksensormittel (3) zum Erfassen des in dem entsprechenden Brennraum (2) auftretenden Brennraumdrucks zugeordnet sind, und daß die Steuermittel (5) derart ausgestaltet sind, dass sie die von den einzelnen Drucksensormitteln (3) erzeugten Brennraumdrucksignale (a) in Kombination auswerten, um die Aussage über den Ladedruck bzw. Abgasgegendruck zu gewinnen.

## Claims

1. Method for monitoring the operation of an internal combustion engine,
the combustion chamber pressure occurring in at least one combustion chamber (2) of the internal combustion engine (1) being detected by pressure sensor means (3), and
the combustion chamber pressure signal (a) generated by the pressure sensor means (3) being evaluated in order to obtain a statement regarding the operation of the internal combustion engine (1), **characterized in that** a statement regarding the charge pressure or the exhaust gas back pressure of the internal combustion engine (1) is derived from the combustion chamber pressure signal (a) of the pressure sensor means (3), and is used to control the operation of the internal combustion engine (1).

2. Method according to Claim 1, **characterized in that** the combustion chamber pressure signal (a) of the pressure sensor means (3) is averaged over a plurality of charge changing cycles of the internal combustion engine (1), and the statement regarding the charge pressure and/or the exhaust gas back pressure of the internal combustion engine (1) is derived from the averaged combustion chamber pressure signal which is obtained in this way.

3. Method according to Claim 2, **characterized in that** the combustion chamber pressure signal (a) of the pressure sensor means (3) is averaged over at least 40 charge changing cycles.

4. Method according to one of the preceding claims, **characterized in that** the statement regarding the charge pressure and/or the exhaust gas back pressure of the internal combustion engine (1) is derived from the combustion chamber pressure signal (a) of the pressure sensor means (3) using a linear model.

5. Method according to one of the preceding claims, **characterized in that** the internal combustion engine (1) has a plurality of combustion chambers (2), pressure sensor means (3) being provided for each combustion chamber (2) in order to detect the combustion chamber pressure occurring in the respective combustion chamber (2), and the combustion chamber pressure signals (a) generated by the individual pressure sensor means (3) being evaluated in combination in order to obtain the statement regarding the charge pressure and/or the exhaust gas back pressure of the internal combustion engine (1).

6. Device for monitoring the operation of an internal combustion engine, having pressure sensor means (3) for detecting the combustion chamber pressure occurring in at least one combustion chamber (2) of the internal combustion engine (1), and having control means (5) for evaluating the combustion chamber pressure signal (a) generated by the pressure sensor means (3) in order to obtain a statement regarding the operation of the internal combustion engine (1), **characterized in that** the control means (5) are designed such that they derive a statement regarding the charge pressure or the exhaust gas back pressure of the internal combustion engine (1) from the combustion chamber pressure signal (a) of the pressure sensor means (3), and control charge pressure adaptation means (11) in order to set the charge pressure and/or the exhaust gas recirculation of the internal combustion engine (1) as a function of said statement.

7. Device according to Claim 6, **characterized in that** the control means are configured for carrying out the method according to one of Claims 1-5.

8. Device according to Claim 6 or Claim 7, **characterized in that** the internal combustion engine (1), which is embodied in particular as a diesel engine, has a plurality of combustion chambers (2), each combustion chamber (2) being assigned pressure sensor means (3) for detecting the combustion chamber pressure occurring in the corresponding combustion chamber (2), and **in that** the control means (5) are designed such that they evaluate the combustion chamber pressure signals (a), which are generated by the individual pressure sensor means (3), in combination in order to obtain the statement regarding the charge pressure and/or the exhaust gas back pressure.

## Revendications

1. Procédé pour contrôler le fonctionnement d'un moteur à combustion interne, dans lequel la pression de chambre de combustion établie dans au moins une chambre de combustion (2) du moteur à combustion interne (1) est détectée avec des moyens de capteurs de pression (3), et dans lequel le signal de pression de chambre de combustion (a) produit par les moyens de capteurs de pression (3) est analysé afin d'obtenir une indication du fonctionnement du moteur à combustion interne (1), **caractérisé en ce que** l'on déduit du signal de pression de chambre de combustion (a) des moyens de capteurs de pression (3) une indication de la pression de charge ou de la contre-pression des gaz d'échappement du moteur à combustion interne (1) et on l'utilise pour commander le fonctionnement du moteur à combustion interne (1).

2. Procédé selon la revendication 1, **caractérisé en ce que** le signal de pression de chambre de combustion (a) des moyens de capteurs de pression (3) est moyenné par le biais de plusieurs cycles de changement de charge du moteur à combustion interne (1) et à partir du signal de pression de chambre de combustion moyenné ainsi obtenu, on en déduit l'indication de la pression de charge ou de la contre-pression des gaz d'échappement du moteur à combustion interne (1).

3. Procédé selon la revendication 2, **caractérisé en ce que** le signal de pression de chambre de combustion (a) des moyens de capteurs de pression (3) est moyenné par le biais d'au moins 40 cycles de changement de charge.

4. Procédé selon l'une quelconque des revendications précédentes, **caractérisé en ce que** l'indication de la pression de charge ou de la contre-pression des gaz d'échappement du moteur à combustion interne (1) est déduite en utilisant un modèle linéaire du signal de pression de chambre de combustion (a) des moyens de capteur de pression (3).

5. Procédé selon l'une quelconque des revendications précédentes, **caractérisé en ce que** le moteur à combustion interne (1) présente plusieurs chambres de combustion (2), des moyens de capteurs de pression (3) étant prévus pour chaque chambre de combustion (2) pour détecter la pression de chambre de combustion établie dans la chambre de combustion (2) respective, et dans lequel les signaux de pression de chambre de combustion (a) produits par les moyens de capteurs de pression individuels (3) sont analysés en combinaison, afin d'obtenir l'indication de la pression de charge ou de la contre-pression des gaz d'échappement du moteur à combustion interne (1).

6. Dispositif pour contrôler le fonctionnement d'un moteur à combustion interne, comprenant des moyens de capteurs de pression (3) pour détecter la pression de chambre de combustion établie dans au moins une chambre de combustion (2) du moteur à combustion interne (1) et comprenant des moyens de commande (5) pour analyser le signal de pression de chambre de combustion (a) produit par les moyens de capteurs de pression (3), afin d'obtenir une indication du fonctionnement du moteur à combustion interne (1), **caractérisé en ce que** les moyens de commande (5) sont configurés de telle sorte qu'ils déduisent du signal de pression de chambre de combustion (a) des moyens de capteurs de pression (3) une indication de la pression de charge ou de la contre-pression des gaz d'échappement du moteur à combustion interne (1) et qu'ils commandent en fonction de cette indication des moyens d'adaptation de la pression de charge (11) pour l'ajustement de la pression de charge ou du recyclage des gaz d'échappement du moteur à combustion interne (1).

7. Dispositif selon la revendication 6, **caractérisé en ce que** les moyens de commande pour mettre en oeuvre le procédé sont configurés selon l'une quelconque des revendications 1 à 5.

8. Dispositif selon la revendication 6 ou 7, **caractérisé en ce que** le moteur à combustion interne (1) configuré notamment en tant que moteur diesel présente plusieurs chambres de combustion (2), des moyens de capteurs de pression (3) pour détecter la pression de chambre de combustion établie dans la chambre de combustion respective (2) étant associés à chaque chambre de combustion (2), et **en ce que** les moyens de commande (5) sont configurés de telle sorte qu'ils analysent les signaux de pression de chambre de combustion (a) produits par les moyens de capteurs de pression individuels (3) en combinaison, afin d'obtenir l'indication de la pression de charge ou de la contre-pression des gaz d'échappement.
